# EUROPEAN PATENT APPLICATION

(11) **EP 3 950 479 A1**
(43) Date of publication of application: **09.02.2022**
(21) Application number: 20020361.0
(22) Date of filing: 07.08.2020
(51) Int. Cl.: B62K 15/00, B62K 3/00, B62H 1/02, B62H 5/00, B62J 6/04, B62J 9/21, B62J 25/04, B62J 43/10, B62J 43/28, B62J 43/30, B62J 45/00, B62J 50/22, B62K 11/14, B62K 19/40, B62K 21/12, B62K 23/02, B62J 7/08, B62J 11/19

(54) **FOLDABLE ELECTRIC SCOOTER**

(71) Applicant: Claes, Mathias, 3001 Herverlee, Vlaams-Brabant (BE)
(72) Inventor: Claes, Mathias, 3001 Herverlee, Vlaams-Brabant (BE)

(57) **Abstract**

An electric scooter (100) that is foldable has been presented herein. The electric scooter comprises at least a first platform (102a), a second platform (102b), and a hollow member (104) with a handlebar assembly (106). The first platform and the second platform are removably or fixedly attached or connected to each other by means of a folding mechanism (118). The folding mechanism comprises a plurality of components (118a-118d), a cylindrical nut (118e), and one or more legs (118f, 118g). The plurality of components, the cylindrical nut, and the one or more legs are removably or fixedly attached or connected together by means of a shaft (118h) such that the one or more legs are rotatable or movable along the shaft and the first platform is foldable along the shaft in a manner in which the first platform is parallel to the hollow member.

## Description

### FIELD OF THE INVENTION

The present disclosure generally relates to scooters, and more particularly to a foldable electric scooter.

### BACKGROUND

With the economic development, many social problems, such as energy shortage, vehicle emission pollution, and urban traffic jams, have become increasingly apparent since travelling has increased enormously. Travelling is an important part of an individual's day-to-day life. The individual may be required to travel for various reasons such as work, education, vacation, or the like. Generally, the individual may use one or more modes of transportation, such as a two-wheeler vehicle, a three-wheeler vehicle, a four-wheeler vehicle, or the like, for travelling. These vehicles may be fuel-based vehicles that require fossil fuel to power their engines. However, such fossil fuel-based vehicles produce a large amount of heat, pollution, and noise which may be undesirable and may lead to global warming and many health hazards. Also, the fossil fuel used in these vehicles are scarcely available in the nature and needs to be conserved. In recent years, electric vehicles have become more and more popular among various users as a new generation of convenient transportation. Among various electric vehicles, an electric scooter is an emerging short distance mode of transportation that is favored by the users because it can be carried around easily. Portability is an important factor for the users to consider when choosing the electric scooters. Electric scooters are getting popular for good reasons. It is simple, compact, and multi-purposeful in many situations. However, there are still many issues to solve for further improvement in the society at a large scale. For example, for the size, the more compact, the better. And if it is foldable, there may be an infinite potentiality for smart folding facilitating portability all around. In addition to the spatial flexibility, the scooter must be multi-purposeful in a creative sense, enabling the scooter used in many otherwise distinct fields of usage. In light of the foregoing, there exists a need for a technical and reliable solution that solves the above-mentioned problems and presents an improved electric scooter that is easy to fold and carry.

### SUMMARY

It will be understood that this disclosure is not limited to the particular electric scooter described herein, as there can be multiple possible embodiments of the present disclosure which are not expressly illustrated in the present disclosure. It is also to be understood that the terminology used in the description is for the purpose of describing the particular versions or embodiments only and is not intended to limit the scope of the present disclosure.

It is an objective of the present invention to provide an electric scooter. The electric scooter comprises at least a first platform, a second platform, and a hollow member with a handlebar assembly. The first platform and the second platform are removably or fixedly attached or connected to each other by means of a folding mechanism. The folding mechanism comprises a plurality of components, a cylindrical nut, and one or more legs. The plurality of components, the cylindrical nut, and the one or more legs are removably or fixedly attached or connected together by means of a shaft such that the one or more legs are rotatable or movable along the shaft and the first platform is foldable along the shaft in a manner in which the first platform is parallel to the hollow member.

In an embodiment, each of the one or more legs is a rigid plastic or metallic structure having a defined shape. Further, each of the one or more legs is provided with an additional wheel that is available for use when the electric scooter has been folded.

In an embodiment, a bottom side of the first platform comprises a slot arrangement for holding or storing or placing the one or more legs with one or more additional wheels. In one example, the one or more legs automatically come out from the slot arrangement while the electric scooter is being folded. In another example, the one or more legs are manually taken out from the slot arrangement by a user while the electric scooter is being folded.

In an embodiment, the handlebar assembly is attached or connected to the hollow member and comprises a plurality of handles including a left handle and a right handle. In an embodiment, the electric scooter further comprises a plurality of wheels including a front wheel and a rear wheel. At least one of the front wheel or the rear wheel is connected to a drive motor through a transmission shaft. In an embodiment, the electric scooter further comprises a brake for controlling a braking operation of the electric scooter. The brake is embedded in the left handle of the handlebar assembly. In an embodiment, the electric scooter further comprises an accelerator for controlling a speed regulating operation of the electric scooter. The accelerator is embedded in the right handle of the handlebar assembly. In one example, the folded electric scooter is moved forward when a user manually push against it. In another example, the folded electric scooter is automatically moved forward when the user uses or presses the accelerator button.

In an embodiment, the electric scooter further comprises a scooter stand that allows the electric scooter to be kept upright without leaning against another object. In an embodiment, the electric scooter further comprises a locking device with a retractable cable. The locking device is used to deter scooter theft by fastening the electric scooter to a fixed object by means of the retractable cable. In an embodiment, the electric scooter further comprises a charging cable or means that is used for charging one or more batteries of the electric scooter. The charging cable is retractable and is hidden within the first platform of the electric scooter.

In an embodiment, the electric scooter further comprises the one or more batteries including at least a primary battery and a secondary battery. The primary battery is installed in the hollow member of the electric scooter and the secondary battery is installed in a storage compartment of the electric vehicle. The storage compartment may be installed at a front side of the hollow member of the electric vehicle.

In an embodiment, the electric scooter further comprises a digital instrument panel for displaying one or more defined information including at least a speed of the electric scooter, a battery level or health of one or more batteries of the electric scooter, and a network connectivity of the electric scooter. In an embodiment, the electric scooter further comprises a back light provided on a rear side of the first platform. The back light may always be in a turned ON state such that the back light emit light all the time.

These and other features and advantages of the present invention will become apparent from the detailed description below, in light of the accompanying drawings.

### BRIEF DESCRIPTION OF ACCOMPANYING DRAWINGS

The present invention is illustratively shown and described in reference to the accompanying drawings, in which:
**FIG. 1** is a diagram that illustrates a perspective view of an electric scooter, according to an exemplary embodiment of the present invention;
**FIGS. 2A** and **2B** are diagrams that collectively illustrates a perspective view of a folding mechanism or system of the electric scooter, according to an exemplary embodiment of the present invention;
**FIG. 3** is a diagram that illustrates a bottom view of the folding mechanism or system of the electric scooter, according to an exemplary embodiment of the present invention;
**FIG. 4** is a diagram that illustrates additional wheels of the electric scooter, according to an exemplary embodiment of the present invention;
**FIG. 5** is a diagram that illustrates a locking device and a charging cable of the electric scooter, according to an exemplary embodiment of the present invention;
**FIG. 6** is a diagram that illustrates a use case scenario of using the locking device of the electric scooter, according to an exemplary embodiment of the present invention;
**FIG. 7** is a diagram that illustrates a folded electric scooter, according to an exemplary embodiment of the present invention; and
**FIG. 8** is a diagram that illustrates a use case scenario of using the folded electric scooter by a user, according to an exemplary embodiment of the present invention.

### DETAILED DESCRIPTION

As used in the specification and claims, the singular forms "a", "an", and "the" may also include plural references. For example, the term "an article" may include a plurality of articles. Those with ordinary skill in the art will appreciate that the elements in the figures are illustrated for simplicity and clarity and are not necessarily drawn to scale. For example, the dimensions of some of the elements in the figures may be exaggerated, relative to other elements, in order to improve the understanding of the present invention. There may be additional components described in the foregoing application that are not depicted on one of the described drawings. In the event such a component is described, but not depicted in a drawing, the absence of such a drawing should not be considered as an omission of such design from the specification.

Before describing the present invention in detail, it should be observed that the present invention utilizes a combination of components, which constitutes a foldable electric scooter. Accordingly, the components have been represented, showing only specific details that are pertinent for an understanding of the present invention so as not to obscure the disclosure with details that will be readily apparent to those with ordinary skill in the art having the benefit of the description herein. As required, detailed embodiments of the present invention are disclosed herein. However, it is to be understood that the disclosed embodiments are merely exemplary of the present invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting but rather to provide an understandable description of the present invention.

References to terms "one embodiment", "an embodiment", "another embodiment", "yet another embodiment", "one example", "an example", "another example", "yet another example", and so on, indicate that the embodiment(s) or example(s) so described may include a particular feature, structure, characteristic, property, element, or limitation, but that not every embodiment or example necessarily includes that particular feature, structure, characteristic, property, element or limitation. Furthermore, repeated use of the phrase "in an embodiment" does not necessarily refer to the same embodiment. The words "comprising", "having", "containing", and "including", and other forms thereof, are intended to be equivalent in meaning and be open ended in that an item or items following any one of these words is not meant to be an exhaustive listing of such item or items or meant to be limited to only the listed item or items.

Unless stated otherwise, terms such as "first" and "second" are used to arbitrarily distinguish between the elements or entities. Thus, these terms are not necessarily intended to indicate temporal or other prioritization of such elements or priorities. While various exemplary embodiments of the disclosed electric scooter have been described below, it should be understood that they have been presented for purposes of example only, and not limitations. It is not exhaustive and does not limit the present invention to the precise form disclosed. Modifications and variations are possible in light of the below teachings or may be acquired from practicing of the present invention, without departing from the breadth or scope.

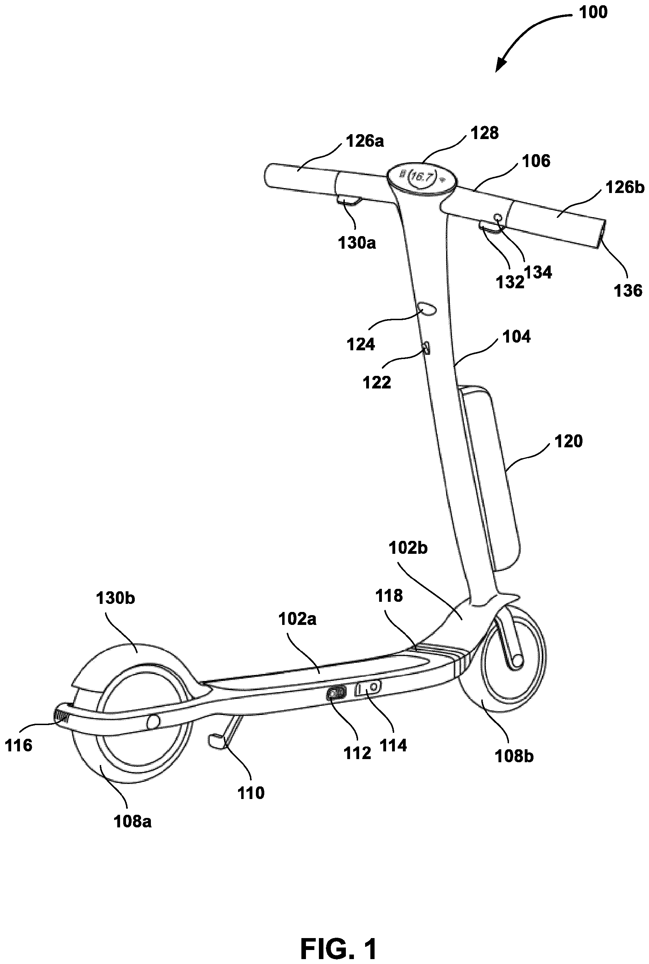

The foldable electric scooter of the present invention will now be described with reference to the accompanying drawings, particularly with respect to **FIGS. 1-8****.**

**FIG. 1** is a diagram that illustrates a perspective view of an electric scooter **100,** according to an exemplary embodiment of the present invention. In an embodiment, the electric scooter **100** comprises a first platform **102a,** a second platform **102b,** a vertical or arcuate hollow member **104,** and a handlebar assembly **106** that is attached or connected to the hollow member **104.** The electric scooter **100** further comprises a plurality of wheels such as a first wheel **108a** and a second wheel **108b.** The electric scooter **100** further comprises a scooter stand **110.** The electric scooter **100** further comprises a locking device **112,** a charging cable (not seen) accessible through a shutter **114,** and a back light **116.** The electric scooter **100** further comprises a folding mechanism or system **118.** The electric scooter **100** further comprises a storage compartment **120,** a hanger **122,** and a switch **124.** The handlebar assembly **106** comprises a plurality of handles (with or without a grip) such as a first handle **126a** and a second handle **126b.** The electric scooter **100** further comprises a digital instrument panel **128,** a first brake **130a,** a second brake **130b,** an accelerator **132,** a horn switch **134,** and a power switch **136.**

In an embodiment, the first platform **102a** and the second platform **102b** are horizontal platforms or decks and are removably or fixedly attached or connected to each other by means of the folding mechanism **118** such that the first platform **102a** may be folded by a user (as and when required) by using the folding mechanism **118.** The first platform **102a** may be folded in a manner in which the first platform **102a** may be parallel to the hollow member **104.** The first platform **102a** may be further connected to a rear wheel such as the first wheel **108a.** In an embodiment, the second platform **102b** may be permanently attached or connected to the hollow member **104.** The hollow member **104** may be perpendicular (or inclined at some defined angle) with respect to at least one of the first platform **102a** or the second platform **102b.** The second platform **102b** and/or the hollow member **104** may be further connected to a front wheel such as the second wheel **108b.** The hollow member **104** may be configured to operate as a steering means for steering or controlling a direction of movement of the second wheel **108b.**

In an embodiment, the electric scooter **100** further includes a control device and a motor drive-connected to at least one of the front or rear wheel through a transmission shaft. The control device may include a controller, the first brake **130a** (such as an electromagnetic brake switch connected to the front frame and configured to control a braking operation of the electric scooter **10**0), and the accelerator **132** (such as an electromagnetic speed regulating switch configured to control a speed regulating operation of the electric scooter **100**). The electromagnetic brake switch, the electromagnetic speed regulating switch, and the drive motor are all connected to the controller. In an exemplary embodiment, when the electromagnetic speed regulating switch is pressed, the controller controls the drive motor to perform speed regulation according to changes of an output voltage of a Hall element in the electromagnetic speed regulating switch. Some parts in the electromagnetic brake switch and the electromagnetic speed regulating switch may be used in common, thereby improving universality of the parts and reducing production costs. In an exemplary embodiment, the electromagnetic brake switch may be embedded or provided or installed in the left handlebar **126a** and the electromagnetic speed regulating switch may be embedded or provided or installed in the right handlebar **126b.**

In an embodiment, the electric scooter **100** further includes a clutch that may be connected between the drive motor and the transmission shaft, and the clutch may be connected to the controller. In an exemplary embodiment, the front frame may be provided with a clutch switch (not shown) for controlling various operations of the clutch and the clutch switch is connected to the controller. During a riding process, the controller may be configured to control the clutch to enable the drive motor to be drive-connected to the transmission shaft so that the drive motor may drive the speed regulation, braking, and other functions of the electric scooter **100.** When the battery is dead or a user needs to ride the electric scooter **100** by himself, the clutch switch may be pressed to disconnect the drive motor from the transmission shaft.

In an embodiment, the electric scooter **100** further includes one or more batteries such as a primary battery and a secondary battery. The one or more batteries may be rechargeable or interchangeable batteries that are used to power the driver, the motor, the folding mechanism, lights, displays, and any central processor used (CPU) in the foldable motorized scooter as described herein. The power source, for example, the rechargeable or interchangeable batteries used to power the driver may be disposed in certain embodiment anywhere on the scooter, so long they can be in electronic communication with the scooter's driver and a recharging power source. In an example, the batteries form an integral part of the front wheel, the rear wheel, or both. In an example, the primary battery may be installed inside the hollow member **104** and the secondary battery may be installed inside the storage compartment **120.** In an exemplary embodiment, the primary battery may be used as primary source of power for driving the electric vehicle **100** during its operation, and the secondary battery may be used for powering lights or display or horn of the electric scooter **100.** In some emergency scenario where the primary battery is completely discharged or a charging level of the primary battery is less than a threshold value, the secondary battery may be used as an emergency source of power for driving the electric vehicle **100** during its operation. Further, a person having ordinary skills in the art would understand that the storage compartment **120** and the secondary battery in the storage compartment **120** have been provided for illustrative purpose only and should not be construed as limiting to the present invention. In many other scenarios, the electric scooter **100** may not include the storage compartment **120** as shown in **FIG. 1****.** In such a case, the secondary battery, if available, may be installed or embedded with other segments of electric vehicle **100** such as the first platform **102a.**

In an embodiment, the scooter stand **110** is a device on the electric scooter **100** that allows the electric scooter **100** to be kept upright without leaning against another object or the aid of a person. The scooter stand **110** is usually a piece of metal that flips down from the frame and makes contact with the ground. It is generally located in the middle of the electric scooter **100** or towards the rear. Some electric scooters may have two stands, one at the rear, and another in the front.

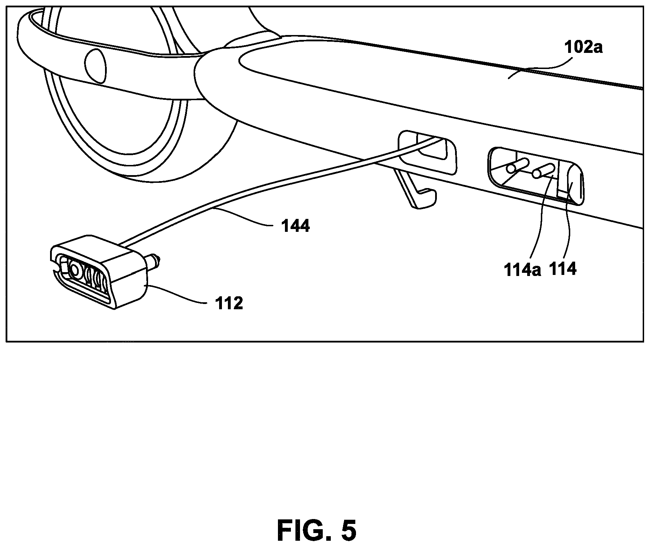

In an embodiment, the locking device **112** is a security device on the electric scooter **100** that is used to deter scooter theft, generally by fastening the electric scooter **100** to a fixed object, e.g., a bike rack. In an embodiment, the charging means or cable **114a** (as shown in **FIG.5**) is a battery charging device on the electric scooter **100** that is used for charging the one or more batteries of the electric scooter **100.** In an embodiment, the back light **116** is a rear lighting system on the electric scooter **100.** In an exemplary embodiment of the present invention, the back light **116** may be turned ON or OFF by using a light switch (not shown). In another exemplary embodiment of the present invention, the electric scooter **100** may not be provided with the light switch. In such a case, the back light is always kept in an ON state and thus emit light all the time. In an embodiment, the switch **134** is a horn switch and is provided on the first handle **126a** as shown in **FIG. 1****.** The horn switch **134** is a sound-making device that is provided on the electric scooter **100** and is used for warning others of the scooter's approach or presence, or to call attention to some hazard. The various switches or buttons of the electric scooter **100** may be implemented or provided as toggle switches, electronic switches, mechanical switches, electro-mechanical switches, or the like without limiting the scope of the present invention. In an embodiment, the hanger **122** is provided on the electric scooter **100** for hanging one or more objects or carry bags. In an embodiment, the digital instrument panel **128** is a display provided on the electric scooter **100** and is configured to display one or more defined information such as a speed of the electric scooter **100,** a battery level or health of the one or more batteries of the electric scooter **100,** a network connectivity of the electric scooter **100,** or the like. In an embodiment, the power switch **136** is an ignition switch or button that is used for energizing (turning ON or OFF) the electric scooter **100** and is provided on the second handle **126b** as shown in **FIG. 1****.** When the power switch **136** is turned ON or pressed by a user, the primary battery starts supplying electrical energy. During the propulsion of the electric scooter **100,** this electrical energy is converted into mechanical energy by using an electric engine (i.e., one or more electric motors such as DC brushless motors, AC induction motors, permanent magnet motors, or the like) of the electric vehicle **100.**

In an embodiment, the switch **124** is a release mechanic switch. This switch **124** may act as an electronic of mechanic release switch that can be used by a user to unlock the folding mechanism of the electric scooter **100.** For example, when the user wants to fold the electric scooter **100,** then the user may press the switch **124** to unlock the folding mechanism of the electric scooter **100.** Once unlocked, the electric scooter **100** may be folded by the user. In an embodiment, the first brake **130a** is front brake and is used for applying braking operation on the front wheel of the electric scooter **100.** The second brake **130b** is a rear brake and is used for applying braking operation on the rear wheel of the electric scooter **100.** The second brake **130b** is a manual brake that is above the rear wheel. The second brake **130b** is a cap which acts as mudguard and a rear brake.

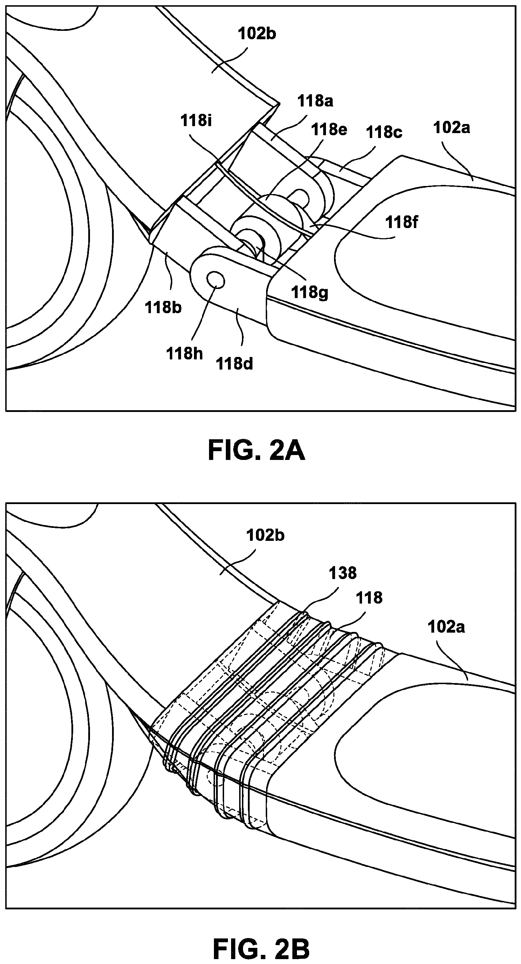

**FIGS. 2A** and **2B** are diagrams that collectively illustrates a perspective view of a folding mechanism or system **118** of the electric scooter **100,** according to an exemplary embodiment of the present invention. As shown in **FIG. 2A****,** the folding mechanism or system **118** comprises a first metallic component **118a** and a second metallic component **118b** that are attached or connected to the second platform **102b.** The folding mechanism or system **118** further comprises a third metallic component **118c** and a fourth metallic component **118d** that are attached or connected to the first platform **102a.** The folding mechanism or system **118** further comprises a cylindrical nut **118e.** The folding mechanism or system **118** further comprises one or more legs such as a first leg **118f** and a second leg **118g.** Further, in an embodiment, the first metallic component **118a,** the second metallic component **118b,** the third metallic component **118c,** the fourth metallic component **118d,** the cylindrical nut **118e,** and the one or more legs such as the first leg **118f** and the second leg **118g** are removably or fixedly attached or connected together by means of a shaft **118h** such that one or more of these components are rotatable or movable along the shaft **118h** and the first platform **102a** is rotatable and foldable along the shaft **118h.** In one example, the cylindrical nut **118e** ensures that the one or more legs such as the first leg **118f** and the second leg **118g** is coming out or going into their respective grooves. The cylindrical nut **118e** ensures that it transforms an opposite turning cycle for the first leg **118f** and the second leg **118g.** In an embodiment, the first platform **102a** and the second platform **102b** are removably or fixedly attached or connected to each other by means of the folding mechanism **118** such that the first platform **102a** may be folded by a user (as and when required) by using the folding mechanism **118.** The first platform **102a** may be folded in a manner in which the first platform **102a** may be parallel to the hollow member **104.** When folded, the first platform **102a** rotates around the shaft **118h** to an appropriate or defined angle while the second platform **102b** remains stationary with respect to the shaft **118h.**

Also, as shown in **FIG. 2A****,** one or more electrical wires or cables (such as the cable **118i**) may pass through from the second platform **102b** and/or the hollow member **104** to the first platform **102a.** These wires or cables electrically connects the one or more batteries to the driver, the motor, lights, displays, and any CPU of the electric scooter **100.** Also, as shown in **FIG. 2B****,** the folding mechanism **118** is covered with a stretchable outer covering **138.** This outer covering **138** may be made of elastic material or plastic material or fabric material that can be stretched from one position to another.

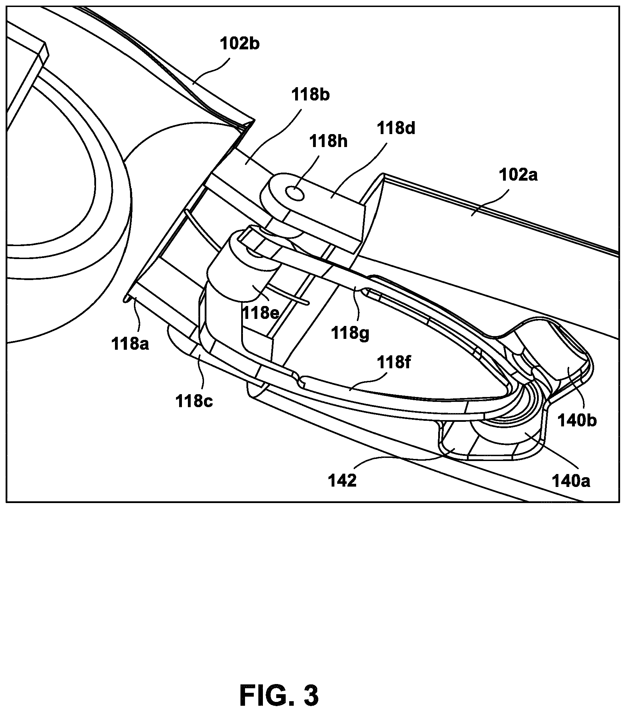

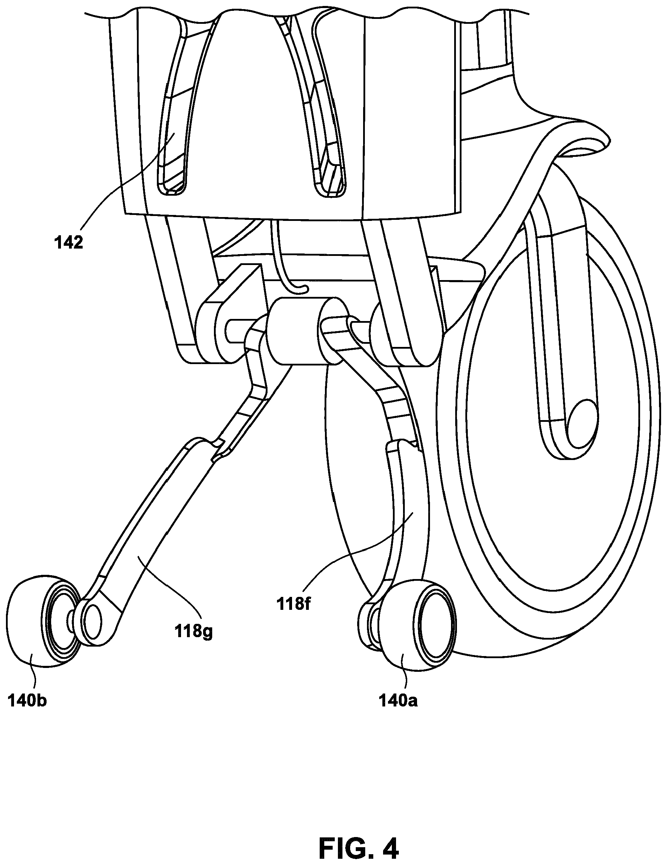

**FIG. 3** is a diagram that illustrates a bottom view of the folding mechanism or system **118** of the electric scooter **100,** according to an exemplary embodiment of the present invention. As shown, the folding mechanism or system **118** comprises the first metallic component **118a** and the second metallic component **118b** that are attached or connected to the second platform **102b.** The folding mechanism or system **118** further comprises the third metallic component **118c** and the fourth metallic component **118d** that are attached or connected to the first platform **102a.** The folding mechanism or system **118** further comprises the cylindrical nut **118e.** The folding mechanism or system **118** further comprises the one or more legs such as the first leg **118f** and the second leg **118g.** The first leg **118f** is provided with a first additional wheel **140a** and the second leg **118g** is provided with a second additional wheel **140b.** Further, the bottom of the first platform **102a** includes a slot arrangement **142** for removably holding or storing or placing the first leg **118f** with the first additional wheel **140a** and the second leg **118g** with the second additional wheel **140b.** Shape and size of the slot arrangement **142** may vary in accordance with shape and size of the first leg **118f,** the first additional wheel **140a,** the second leg **118g,** and the second additional wheel **140b.** When the electric scooter **100** is not folded (i.e., the first platform **102a** is not folded and is horizontally placed on a surface), the one or more legs of the electric scooter **100** such as the first leg **118f** and the second leg **118g** are fitted or held or placed or stored in one or more grooves of the slot arrangement **142.** However, when the electric scooter **100** is folded (i.e., the first platform **102a** is folded), the one or more legs of the electric scooter **100** such as the first leg **118f** and the second leg **118g** may automatically come out of the one or more grooves of the slot arrangement **142** as shown in **FIG. 4. FIG. 4** is a diagram that illustrates the additional wheels of the electric scooter **100,** according to an exemplary embodiment of the present invention. In some embodiments, the one or more legs of the electric scooter **100** such as the first leg **118f** and the second leg **118g** may be manually pulled out from the one or more grooves of the slot arrangement **142** by a user of the electric scooter **100,** when the user is folding or has folded the electric scooter **100.** In an embodiment, the one or more legs of the electric scooter **100** such as the first leg **118f** and the second leg **118g** may be rotatable or movable along the shaft **118h.** The cylindrical nut **118e** ensures that the one or more legs are coming out or going into the one or more grooves of the slot arrangement **142.**

**FIG. 5** is a diagram that illustrates the locking device **112** and the charging cable **114a** (accessible by operating the shutter **114**) of the electric scooter **100,** according to an exemplary embodiment of the present invention. The charging cable **114a** may be a retractable cable and may be hidden within the first platform of the electric scooter **100.** The locking device **112** may be a security device (such as a mechanical, electronic, electro-mechanical switching device) that is used to deter scooter theft, generally by fastening the electric scooter **100** to a fixed object, e.g., a bike rack. The locking device **112** may include a retractable cable **144** that can be retracted or extended during locking the electric scooter **100** to the fixed object. In an embodiment, the shutter **114** with the charging cable **114a** is a battery charging device on the electric scooter **100** that is used for charging the one or more batteries (such as the primary battery and the secondary battery) of the electric scooter **100.** The charging cable **114a** may be plugged into a power supply source (such as 120 volts or 220 volts power supply) to charge the one or more batteries of the electric scooter **100.** The charging cable **114a** is also a retractable charging cable that can be retracted or extended during the charging process.

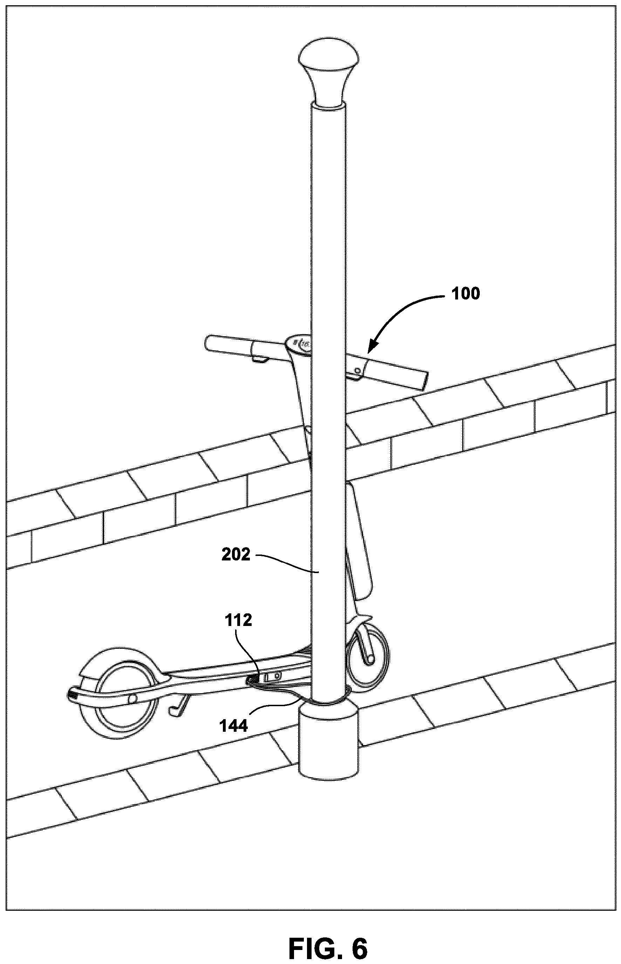

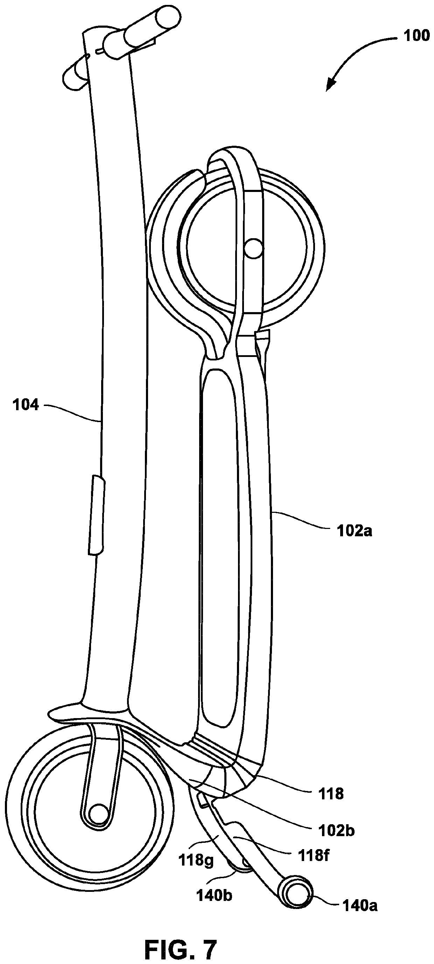

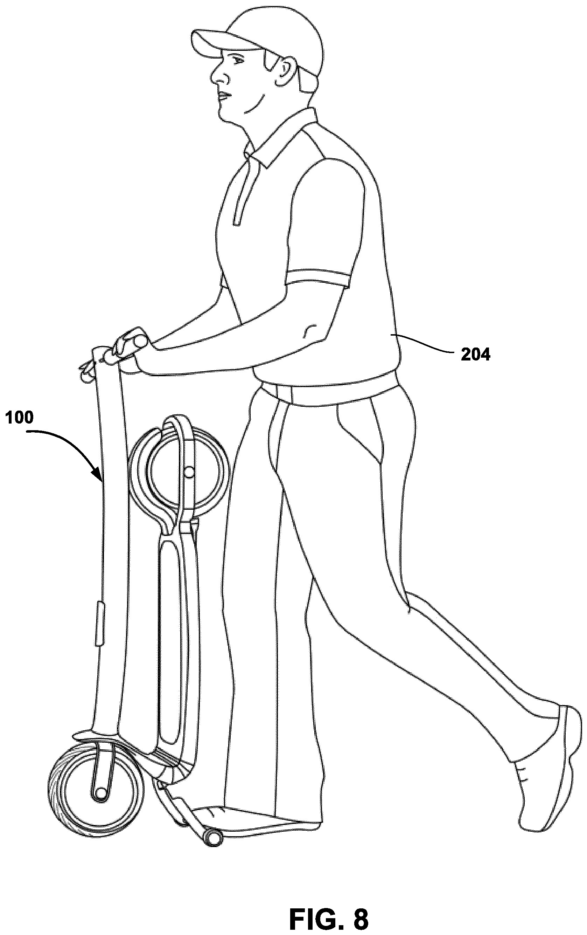

**FIG. 6** is a diagram that illustrates a use case scenario of using the locking device **112** of the electric scooter **100,** according to an exemplary embodiment of the present invention. As shown, the retractable cable **144** has been used for fastening the electric scooter **100** to a fixed object such as a fixed pole **202.** **FIG. 7** is a diagram that illustrates the folded electric scooter **100,** according to an exemplary embodiment of the present invention. As shown, the electric scooter **100** has been folded such that the first platform **102a** may be parallel to the hollow member **104.** When folded, the first platform **102a** rotates around the shaft **118h** of the folding mechanism **118** to an appropriate or defined angle while the second platform **102b** remains stationary with respect to the shaft **118h.** Further, when folded, the one or more legs of the electric scooter **100** such as the first leg **118f** and the second leg **118g** may come out from the one or more grooves of the slot arrangement **142** (either automatically or manually) and provide the required support for carrying the electric scooter **100** by means of the one or more wheels such as the first additional wheel **140a** and the second additional wheel **140b.** **FIG. 8** is a diagram that illustrates a use case scenario of using the folded electric scooter **100** by a user **204,** according to an exemplary embodiment of the present invention. As shown, the user **204** has folded the electric scooter **100.** Further, the user **204** is moving the electric scooter **100** by pushing it. The electric scooter **100** moves over the one or more wheels such as the front wheel and additional wheels as pushed by the user **204.** Also, instead of manually pushing the folded electric scooter **100,** the user **204** may press the accelerator **132,** which in turn will automatically assist in moving forward while the electric scooter **100** is in the folded state.

While various embodiments of the disclosure have been illustrated and described, it will be clear that the disclosure is not limited to these embodiments only. Numerous modifications, changes, variations, substitutions, and equivalents will be apparent to those skilled in the art, without departing from the spirit and scope of the disclosure, as described in the claims. Although particular embodiments of the invention have been described in detail for purposes of illustration, various modifications and enhancements may be made without departing from the spirit and scope of the invention. The scope of the invention is accordingly defined by the following claims.

## Claims

1. An electric scooter (100), comprising:
a first platform (102a),
a second platform (102b), and
a hollow member (104) with a handlebar assembly (106),
wherein the first platform (102a) and the second platform (102b) are attached or connected to each other by means of a folding mechanism (118),
wherein the folding mechanism (118) comprises a plurality of components (118a, 118b, 118c, and 118d), a cylindrical nut (118e), and one or more legs (118f and 118g), and
wherein the plurality of components (118a, 118b, 118c, and 118d), the cylindrical nut (118e), and the one or more legs (118f and 118g) are attached or connected together by means of a shaft (118h) such that the one or more legs (118f and 118g) are rotatable or movable along the shaft (118h) and the first platform (102a) is foldable along the shaft (118h) in a manner in which the first platform (102a) is parallel to the hollow member (104).

2. The electric scooter (100) of claim 1, wherein each of the one or more legs (118f and 118g) is a rigid plastic or metallic structure having a defined shape, wherein each of the one or more legs (118f and 118g) is provided with an additional wheel (140a or 140b) that is available for use when the electric scooter (100) has been folded.

3. The electric scooter (100) of claim 1, wherein a bottom side of the first platform (102a) comprises a slot arrangement (142) for holding or storing or placing the one or more legs (118f and 118g) with one or more additional wheels (140a and 140b).

4. The electric scooter (100) of claim 3, wherein the one or more legs (118f and 118g) are configured to automatically come out from the slot arrangement (142) while the electric scooter (100) is being folded.

5. The electric scooter (100) of claim 3, wherein the one or more legs (118f and 118g) are manually taken out from the slot arrangement (142) by a user when the electric scooter (199) is fully folded.

6. The electric scooter (100) of claim 1, wherein the handlebar assembly (106) is attached or connected to the hollow member (104) and comprises a plurality of handles including a left handle (126a) and a right handle (126b).

7. The electric scooter (100) of claim 1, further comprising a plurality of wheels including a front wheel (108b) and a rear wheel (108a), wherein at least one of the front wheel (108b) or the rear wheel (108a) is connected to a drive motor through a transmission shaft.

8. The electric scooter (100) of claim 1, wherein the first platform (102a) and the second platform (102b) are fixedly or removably connected to each other.

9. The electric scooter (100) of claim 1, further comprising an accelerator (132) for controlling a speed regulating operation of the electric scooter (100), wherein the accelerator (132) is embedded in a right handle (126b) of the handlebar assembly (106), and wherein the folded electric scooter (100) is moved forward when a user pushes against it or when the user uses the accelerator (132).

10. The electric scooter (100) of claim 1, further comprising a scooter stand (110) that allows the electric scooter (100) to be kept upright without leaning against another object.

11. The electric scooter (100) of claim 1, further comprising a locking device (112) with a retractable cable (144), wherein the locking device (112) is used to deter scooter theft by fastening the electric scooter (100) to a fixed object by means of the retractable cable (144).

12. The electric scooter (100) of claim 1, further comprising a charging cable or means (114a) that is used for charging one or more batteries of the electric scooter (100), wherein the charging cable (114a) is retractable and is hidden within the first platform (102a).

13. The electric scooter (100) of claim 1, further comprising a plurality of batteries including a primary battery and a secondary battery, wherein the primary battery is installed in the hollow member (104) of the electric scooter (100) and the secondary battery is installed in a storage compartment (120) of the electric vehicle (100), wherein the storage compartment (120) is installed at a front side of the hollow member (104) of the electric vehicle (100).

14. The electric scooter (100) of claim 1, further comprising a digital instrument panel (128) for displaying defined information including at least a speed of the electric scooter (100), a battery level or health of one or more batteries of the electric scooter (100), and a network connectivity of the electric scooter (100).

15. The electric scooter (100) of claim 1, further comprising a back light (116) provided on a rear side of the first platform (102a), wherein the back light is always in a turned ON state.
